Europäisches Patentamt

European Patent Office

Office européen des brevets

(11) Veröffentlichungsnummer: **0 638 745 A1**

## (12) EUROPÄISCHE PATENTANMELDUNG

(21) Anmeldenummer: **94111098.3**

(22) Anmeldetag: **16.07.94**

(51) Int. Cl.⁶: **F16K 11/085**

(30) Priorität: **11.08.93 DE 4326916**

(43) Veröffentlichungstag der Anmeldung:
**15.02.95 Patentblatt 95/07**

(84) Benannte Vertragsstaaten:
**CH DE DK FR GB IT LI**

(71) Anmelder: **BUEHLER GmbH**
**Ernst-Amme-Strasse 19**
**D-38114 Braunschweig (DE)**

(72) Erfinder: **Westendarp, Dipl.-Ing.**
**Hans-Heinrich**
**Ratsbleiche 11**
**D-38114 Braunschweig (DE)**

(74) Vertreter: **Révy von Belvárd, Peter**
**BÜHLER AG,**
**Patentabteilung**
**CH-9240 Uzwil (CH)**

(54) **Kükenweiche.**

(57) Eine Kükenweiche zur wahlweisen Verbindung einer ersten Förderleitung mit einer von zwei zweiten Förderleitungen, umfasst ein Gehäuse (1) mit drei Verbindungsöffnungen (4) und nach aussen daran anschliessenden Anschlusskanälen (6) und ein im Gehäuse drehbares kreiszylinderförmiges Küken (2) mit einem gekrümmten Durchgangskanal (3). Die Anschlusskanäle (6) und der Durchgangskanal (3) gehen in Übergangsbereichen (8), die sich in Kanalrichtung über die gekrümmte Verbindungsöffnung (4) erstrecken, gerade und absatzfrei in einander über. Zwischen den beidseitigen Übergangsbereichen (8) ist im wesentlichen der gesamte Durchgangskanal (3) gekrümmt ausgebildet. Abhängig von den Radien (RR,RK) des Durchgangskanales (3) und des Kükens (2) wird für den totalen Krümmungswinkel ($\alpha$) des Durchgangskanales (3) ein vorteilhafter Winkelbereich angegeben. Die Kükenweiche hat aufgrund der optimalen Dimensionierung immer eine möglichst kleine Baugrösse und kann vielseitig eingesetzt werden.

Fig.1

Die Erfindung betrifft eine Kükenweiche nach dem Oberbegriff des Anspruches 1.

Kükenweichen sind schon in grosser Zahl und in verschiedenartigen Ausgestaltungen bekannt. Sie werden beispielsweise in Fördersystemen eingesetzt, um Schuttgüter entweder von einem Aufgabeort wahlweise zu einem ersten oder einem zweiten Empfangsort, oder umgekehrt wahlweise von einem ersten oder zweiten Aufgabeort zu einem gemeinsamen Empfangsort zu leiten. Die Förderung kann dabei im Druck- oder Saugbetrieb erfolgen. Zum Ändern der Förderwege wird die Weiche manuell, elektromotorisch, oder pneumatisch betätigt.

Die bekannten Weichen sind gross und schwer gebaut. Da sie den Gutstrom zum Teil stark ablenken, treten bei grossen Fördergeschwindigkeiten entsprechend grosse Stosskräfte auf, sodass die Weiche an einer Struktur mit grosser Festigkeit befestigt werden muss. Es gibt auch Weichen, die zu Verstopfungen durch abgesetztes Schüttgut neigen.

Die erfindungsgemässe Aufgabe besteht nun darin, eine Kükenweiche zu beschreiben, die klein gebaut und leicht ist. Die Kanalführung soll zumindest in einer Hauptförderrichtung so sein, dass die vom Schüttgut auf die Weiche wirkenden Stosskräfte minimal sind und keine Schüttgutablagerungen auftreten.

Zur Lösung der Aufgabe wird vorgesehen, dass die Kanäle in den Anschlussflanschen und im Küken in Übergangsbereichen gerade und absatzfrei ineinander übergehen, sodass sich keine Schüttgutablagerungen ergeben. Die Übergangsbereiche liegen je zwischen zwei zur Zylinderachse und zueinander parallelen Berandungsebenen, die in Kanalrichtung beidseits an die, auf einem Zylindermantel angeordnete und somit gekrümmte, Verbindungsöffnung anschliessen. Die zentralen Achsen der geraden Übergangsbereiche sind vorzugsweise im wesentlichen auf die Zylinderachse ausgerichtet und stehen insbesondere senkrecht auf diesen. Der Durchgangskanal des Kükens ist im wesentlichen in seinem gesamten zentralen Bereich zwischen den beiden seitlichen Übergangsbereichen gekrümmt. Durch das Vorsehen des grösstmöglichen zentralen Krümmungsbereiches und von Übergangsbereichen mit minimaler Ausdehnung, entsteht in beiden Küken-Durchgangsstellungen ein absatzfreier Förderkanal durch eine Weiche mit minimaler Abmessung.

Der Winkel zwischen den zentralen Achsen der geraden Übergangsbereiche, die durch den Durchgangskanal jeweils miteinander verbunden werden, ist der Krümmungswinkel des Durchgangskanales. Um von der einen auf die andere Durchgangsstellung umzustellen, wird das Küken so um den Krümmungswinkel gedreht, dass der Durchgangskanal wieder beidseits an Verbindungsöffnungen anschliesst.

Um die Stosskräfte zumindest bei einer Durchgangsstellung so klein wie möglich zu halten, wird die Krümmung des Durchgangskanales so klein wie möglich und vorzugsweise entlang des Kanales konstant gewählt. Ausgehend von einem Radius des Durchgangskanales, der dem inneren Rohrradius RR des Förderrohres entspricht, und einem Kükenradius RK, muss der totale Krümmungswinkel $\alpha$ grösser als

$\alpha_{min}$ = arcsin(RR/RK) und kleiner als
$\alpha_{max}$ = 2•arccos(RR/RK) gewählt werden.

Vorzugsweise liegt der Krümmungswinkel aber in jener Hälfte, insbesondere jenem Viertel oder Achtel, die, bzw. der, an $\alpha_{min}$ anschliesst. Bei einem bekanntem Rohrradius RR und einer gewünschten minimalen Krümmung $\alpha$ muss der Kükenradius RK also wenig grösser als RR/sin($\alpha$) sein.

Für die Stosskräfte und den Strömungswiderstand im Küken ist nebst dem Krümmungswinkel auch der Krümmungsradius der zentralen Achse des Durchgangskanales von entscheidender Bedeutung. Dieser Krümmungsradius RA hängt gemäss der folgenden funktionalen Beziehung vom Rohrradius RR, vom Kükenradius RK und vom Krümmungswinkel $\alpha$ ab:

$$RA = (RK^2-RR^2)^{\frac{1}{2}}/\tan(\alpha/2)$$

Zum Erzielen von minimalen Stosskräften muss der Krümmungsradius so gross wie möglich sein. Entsprechend dem minimalen Krümmungswinkel $\alpha_{min}$ gibt es einen maximalen Krümmungsradius $RA_{max}$:

$$RA_{max} = (RK^2-RR^2)^{\frac{1}{2}}•(RK + (RK^2-RR^2)^{\frac{1}{2}})/RR$$

Sind ein Krümmungsradius und ein Rohrradius vorgegeben, so kann aus der obigen Beziehung ein minimal nötiger Kükenradius bestimmt werden.

Der minimale Krümmungsradius $RA_{min}$ beträgt:

$$RA_{min} = RR$$

und geht mit dem kleinsten Kükenradius $RK_{min}$ und mit dem grössten Krümmungswinkel $\alpha_{max}$ einher. Alle möglichen Krümmungsradien liegen zwischen $RA_{max}$ und $RA_{min}$, vorzugsweise aber näher bei $RA_{max}$, also in jener Hälfte, insbesondere in jenem Viertel oder Achtel des Bereiches zwischen $RA_{max}$ und $RA_{min}$, die, bzw. der, näher bei $RA_{max}$ liegt.

Die erfindungsgemässe Weiche ermöglicht eine Optimierung von Baugrösse, bzw. Kükenradius, und von aufgrund der Krümmung des Durchgangskanales entstehender Stoss-, bzw. Umlenkkräfte, indem beispielsweise der Kükenradius für jeden Krümmungsradius und Krümmungswinkel so klein wie möglich gewählt werden kann. Durch die Wahl von möglichst grossen Krümmungsradien werden die Stabilitäts-Anforderungen an das Weichengehäuse und an seine Lagerung und somit das Gewicht so klein wie möglich gehalten.

Ein weiterer Vorteil der erfindungsgemässen Lösung ist die Möglichkeit, dass auch bei der Verwendung von Standart-Rohrstücken für das Küken und gegebenenfalls die Anschlusskanäle eine optimale Weiche zusammengestellt werden kann. Die Krümmung der Anschlusskanäle kann so auf die Krümmung des Durchgangskanales abgestimmt werden, dass zumindest in einer Durchgangsverbindung die beiden an die Förderleitungen anschliessenden Anschlusskanalenden parallel, insbesondere aber fluchtend ausgebildet sind. Die zweite Durchgangsverbindung kann zwischen den an die Weiche anschliessenden Leitungen einen gewünschten Winkel, beispielsweise 45° oder 90° vorsehen.

Im folgenden wird die Erfindung anhand von Zeichnung, die verschiedene erfindungsgemässe Ausführungsformen darstellen näher erläutert.

Fig. 1:  Schnitt durch eine Kükenweiche in der Ebene der zentralen Kanalachsen.
Fig. 2:  Schnitt durch eine Kükenweiche senkrecht zum Durchgangskanal.
Fig. 3:  Schnitt durch eine Kükenweiche mit drei gekrümmten Anschlusskanälen.
Fig. 4:  Schnitt durch eine Kükenweiche mit zwei geraden und einem gekrümmten Anschlusskanal.

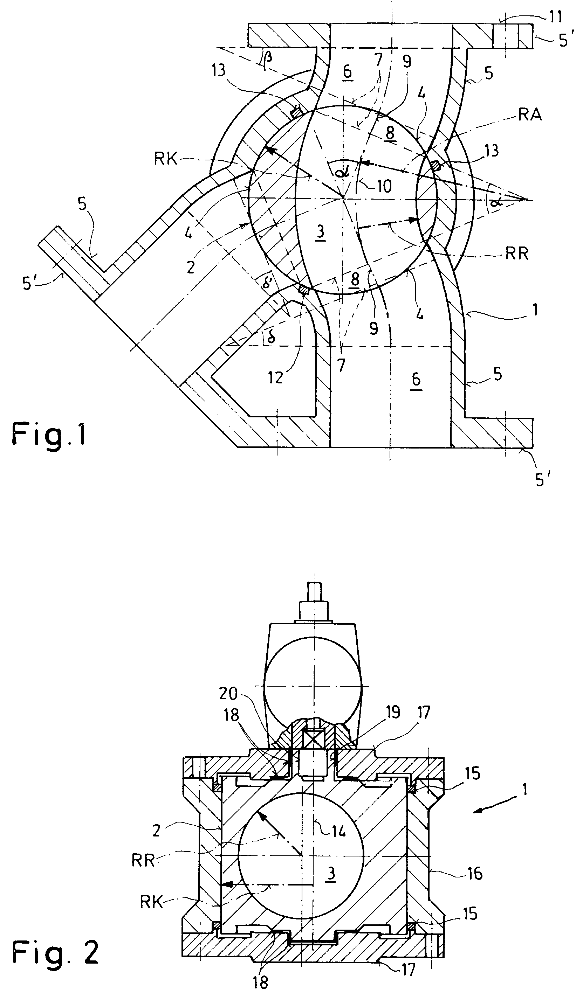

Ein erfindungsgemässes Ausführungsbeispiel einer Kükenweiche gemäss Fig. 1 umfasst im wesentlichen ein Gehäuse 1 und ein darin drehbar angeordnetes kreiszylinderförmiges Küken 2 mit dem Kükenradius RK und mit einem Durchgangskanal 3. Im Gehäuse sind drei Verbindungsöffnungen 4 und daran nach aussen anschliessende Anschlusskanälen 6 in Anschlussflanschen 5 vorgesehen. In beiden Durchgangspositionen schliesst auf beiden Seiten des Durchgangskanales 3 absatzfrei je ein Anschlusskanal 6 an. Die Kanäle 3 und 6 haben vorzugsweise eine kreisförmige Querschnittsfläche mit dem Rohrradius RR. Die Kanalberandungen schliessen jeweils bei einer Verbindungsöffnung 4 aneinander an. Die Verbindungsöffnungen 4 liegen auf der Mantelfläche des Kreiszylinders im Kontaktbereich zwischen dem Küken und dem Gehäuse und sind somit gekrümmt.

Der Bereich zwischen zwei zur Zylinderachse und zu einander parallelen Berandungsebenen 7, die beidseits an jede gekrümmte Verbindungsöffnung 4 anliegen, ist ein Übergangsbereich in dem der Kanal teilweise vom Küken und teilweise vom Gehäuse berandet wird. Um einen absatzfreien Anschluss zwischen Anschlusskanal 6 und Durchgangskanal 3 zu gewährleisten, ist der Übergangsbereich 8, also sowohl der Durchgangskanal 3 als auch der Anschlusskanal 6 im Übergangsbereich 8 mit einer geraden Übergangs-Kanalachse 9 und einem konstanten Querschnitt ausgebildet. Die jeweilige Ausrichtung der Achsen des Durchgangskanales 3 und des Anschlusskanales 6 im Übergangsbereich 8 muss so gewählt werden, dass sie nach dem Drehen des Kükens 2 von einer Durchgangsverbindung zur anderen jeweils in den Übergangsbereichen 8 aufeinander fallen. Vorzugsweise sind diese Achsen im wesentlichen auf die Zylinderachse ausgerichtet und insbesondere senkrecht zur Zylinderachse angeordnet.

Der Krümmungswinkel $\alpha$ ist ein Mass für die Krümmung des Durchgangskanales 3 und liegt somit zwischen den Übergangs-Kanalachsen 9 der beiden Übergangsbereiche 8 des Durchgangskanales 3. Da diese Achsen in der dargestellten Ausführungsform senkrecht auf den Berandungsebenen 7, die an beiden Enden des Durchgangskanales 3 angeordnet sind, stehen, entspricht auch der Winkel zischen diesen Ebenen dem Krümmungswinkel $\alpha$. Damit zwei absatzfreie Durchgangswege durch die Weiche möglich sind, muss der Krümmungswinkel $\alpha$ zwischen einem minimalen $\alpha_{min}$ und einem maximalen $\alpha_{max}$, jeweils vom Rohr- und vom Kükenradius abhängigen, Winkel liegen. Es gilt dabei:

$$\alpha_{min} = \arcsin(RR/RK) \text{ und}$$
$$\alpha_{max} = 2 \cdot \arccos(RR/RK)$$

Um die bei der Schüttgutförderung auftretenden Stosskräfte so klein wie möglich zu halten, soll der Krümmungswinkel so klein wie möglich und somit nahe bei $\alpha_{min}$ gewählt werden.

Nebst dem Krümmungswinkel $\alpha$ ist auch der Krümmungsradius RA der zentralen gekrümmten Durchgangskanalachse 10 ein Mass für die Krümmung des Durchgangskanales 3. Dieser Krümmungsradius RA hängt gemäss der folgenden funktionalen Beziehung vom Rohrradius RR, vom Kükenradius RK und vom Krümmungswinkel $\alpha$ ab:

$$RA = (RK^2 - RR^2)^{\frac{1}{2}}/\tan(\alpha/2)$$

Bei der Ausführung gemäss Fig. 1 wurde ein Krümmungswinkel von 45° gewählt. Der Quotient zwischen dem Rohrradius und dem Kükenradius RR/RK muss also kleiner als $\sin(45°) = 0.71$ sein. Er beträgt in der dargestellten Ausführung 0.65. Der Krümmungsradius RA wird als Vielfaches des Rohrradius RR ausgedrückt

$$RA = ((RK^2/RR^2 - 1)^{\frac{1}{2}}/\tan(\alpha/2)) \cdot RR \text{ ,}$$

wobei $RK^2/RR^2 = 1/0.65^2$ und somit:

$$RA = 2.79 * RR$$

Um eine möglichst günstige Kükenweiche herzustellen, wird gegebenenfalls das Küken aus einem Zylindermantel mit Grund- und Deckfläche und einem gekrümmten, den Durchgangskanal 3 bildenden, Rohrstück zusammengestellt. Bei der Dimensionierung kann dabei auch vom Rohrradius RR und vom Krümmungsradius RA eines Standard-Rohrstückes ausgegangen werden. Bei der Wahl des Kükenradius RK kann wiederum der Radius eines Standard-Rohres eingesetzt werden, wobei der gemäss der obigen funktionalen Beziehung zu wählende Krümmungswinkel $\alpha$ im, durch die Wahl von RK und RR festgelegten, Winkelbereich zwischen $\alpha_{min}$ und $\alpha_{max}$ liegen muss. Ist der Winkel kleiner als $\alpha_{min}$, so muss RK grösser gewählt werden.

Die Ausführung gemäss Fig. 1 sieht vor, dass zwei durch den Durchgangskanal 3 miteinander verbindbare Anschlusskanäle 6 je einem Krümmungsbereich umfassen, in welchem sich die Kanalachse um den Winkel $\beta$, bzw. $\delta$, krümmt, und dass die Winkel $\beta$ und $\delta$ in der Durchflussrichtung vorzugsweise je dem negativen halben Krümmungswinkel des Durchgangskanales in Durchflussrichtung, also $-\alpha/2$, entsprechen. Bei dieser Wahl der Kanalkrümmungen schliessen die Leitungen beidseits der Weiche im wesentlichen fluchtend an die Weiche an. Der dritte Anschlusskanal ist in Durchflussrichtung um den Winkel $\beta$, bzw. $\delta$, $\delta' = +\alpha/2$ gekrümmt, sodass bei einer Verbindung, die an diesen Anschlusskanal anschliesst, die Leitungen beidseits der Weiche unter einem Winkel von $\alpha$ zueinander angeordnet sind. Wird $\alpha = 45°$ gewählt, so sind $\beta$ und $\delta$ je $-22.5°$ und $\delta'$ wird $22.5°$. Zum Befestigen der Förderleitungen stehen an den Anschlussenden der Anschlussflansche 5 Anschlussringe 5' mit Befestigungslöchern 11 seitlich nach aussen.

Zwischen den beiden nicht miteinander verbindbaren Anschlusskanälen ist vorzugsweise eine Dichtung 12 im wesentlichen über die gesamte Höhe des Kükens 2 vorzugsweise am Gehäuse, gegebenenfalls aber am Küken befestigt. Die Dichtung 12 verhindert das Ein- oder Ausströmen von Leckluft durch den nicht verbundenen Anschlusskanal 6. Gegebenenfalls sind im Bereich seitlich der, der Dichtung 12 gegenüberliegenden Verbindungsöffnung 4 weitere Dichtungen 13 analog zur Dichtung 12 vorgesehen.

Der Schnitt gemäss Fig. 2 steht senkrecht zum Schnitt gemäss Fig. 1 und führt durch die Zylinderachse 14. Das Küken 2 liegt direkt umschlossen im Gehäuse 1. Zur Dichtung sind an beiden Endbereichen des Kükenzylinders ringförmige Dichtungen 15 vorgesehen. Das Gehäuse 1 besteht im wesentlichen aus einem Wandteil 16 das das Küken zylinderförmig umschliesst und aus zwei Deckelteilen 17, die an dem Wandteil 16 befestigt werden und Lagerelemente 18 zur drehbaren Lagerung des Kükens 2 umfassen. Zumindest in einem Deckelteil ist eine Durchführung 19 für eine Kükenantriebsachse 20 vorgesehen. Die Antriebsachse 20 wird manuell, elektromotorisch oder pneumatisch angetrieben.

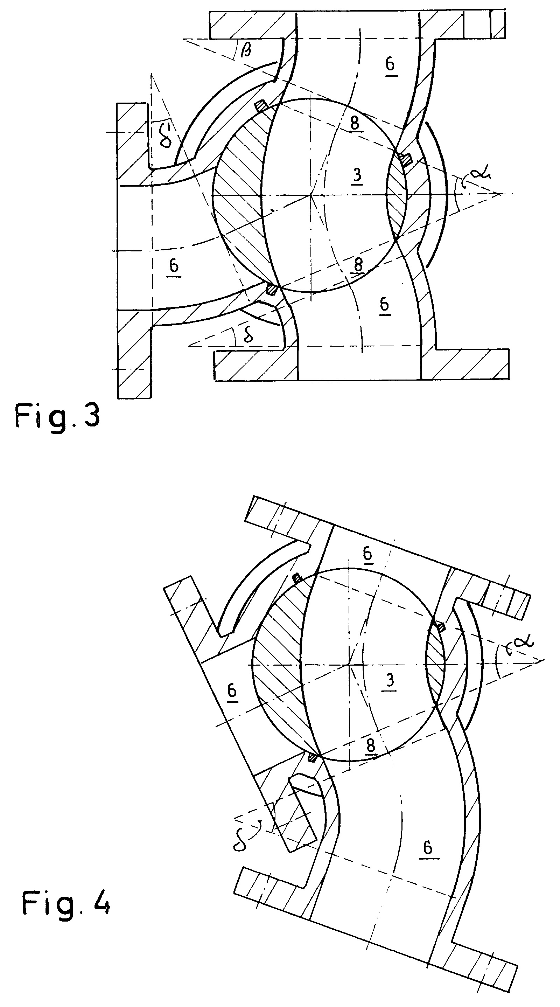

Die Ausführungsform gemäss Fig. 3 zeigt eine Kükenweiche bei der der Durchgangskanal 6 in der Förderrichtung um $\alpha$ und alle drei Anschlusskanäle um $-\alpha/2$ gekrümmt sind. Bei einem bevorzugten $\alpha$ von im wesentlichen 45° sind die Anschlusskanäle um im wesentlichen $-22.5°$ gekrümmt, sodass in der einen Durchgangsverbindung die an die Weiche anschliessenden Leitungen fluchtend und in der anderen Durchgangsverbindung um 90° abgewinkelt angeordnet sind.

Eine weitere Ausführungsform zeigt gemäss Fig. 4, dass die Anschlusskanäle 6 auch gerade und/oder um einen beliebigen Winkel, beispielsweise um $\delta = -\alpha$ gekrümmt sein können. Die Möglichkeit, an die geraden Übergangsbereiche 8 eines Kükens mit dem kleinstmöglichen Radius, verschiedenartig gekrümmte Anschlusskanäle anzuschliessen, erlaubt einen äusserst vielseitigen Einsatz der erfindungsgemässen Kükenweiche.

**Patentansprüche**

1. Kükenweiche zur wahlweisen Verbindung einer ersten Förderleitung mit einer von zwei zweiten Förderleitungen, welche Weiche ein Gehäuse (1) mit drei Verbindungsöffnungen (4) und nach aussen daran anschliessenden Anschlussflanschen (5) mit Anschlusskanälen (6), die an die Förderleitungen anschliessen, und ein im Gehäuse (1) drehbares Küken (2) mit einem gekrümmten Durchgangskanal (3) umfasst, wobei das Gehäuse (1) und das Küken (2) zumindest im Bereich eines Zylinder-Achsenabschnittes eine kreiszylinderförmige Berandung haben, dadurch gekennzeichnet, dass

   a) die Kanäle (6,3) in den Anschlussflanschen (5) und im Küken (2) zumindest in Übergangsbereichen (8) zwischen je zwei zur Zylinderachse und zueinander parallelen Berandungsebenen (7), die in Kanalrichtung beidseits an die gekrümmte Verbindungsöffnung (4) anschliessen, gerade und absatzfrei ineinander übergehen, und

   b) im wesentlichen der gesamte Durchgangskanal (3) zwischen den beidseitigen Übergangsbereichen (8) gekrümmt ist.

2. Kükenweiche nach Anspruch 1, dadurch gekennzeichnet, dass die Kanalachse (9) in den geraden Übergangsbereichen (8) im wesentlichen auf die Zylinderachse ausgerichtet ist und vorzugsweise senkrecht auf dieser steht.

3. Kükenweiche nach Anspruch 1 oder nach Anspruch 2, dadurch gekennzeichnet, dass die Krümmung des Durchgangkanals (3) vorzugsweise im wesentlichen konstant ist und der Winkel ($\alpha$) zwischen den Kanalachsenabschnitten (9) in beiden Übergangsbereichen (8), für alle möglichen Verhältnisse zwischen dem Rohrradius (RR) und dem Kükenradius (RK) grösser als

$\alpha_{min}$ = arcsin(RR/RK) und kleiner als
$\alpha_{max}$ = 2•arccos(RR/RK) ist,

vorzugsweise aber in jener Hälfte, insbesondere jenem Viertel oder Achtel des Bereiches zwischen $\alpha_{min}$ und $\alpha_{max}$ liegt, der an $\alpha_{min}$ anschliesst.

4. Kükenweiche nach Anspruch 3, dadurch gekennzeichnet, dass der Krümmungsradius (RA) der Achse (10) des Durchgangskanales (3) entsprechend dem Krümmungswinkelbereich zwischen $\alpha_{min}$ und $\alpha_{max}$ kleiner als

$RA_{max}$ = $(RK^2-RR^2)^{\frac{1}{2}}$•$(RK + (RK^2-RR^2)^{\frac{1}{2}})$/RR

und grösser als

$RA_{min}$ = RR

ist, vorzugsweise aber in jener Hälfte, insbesondere jenem Viertel oder Achtel des Bereiches zwischen $RA_{max}$ und $RA_{min}$ liegt, der an $RA_{max}$ anschliesst, wobei RR der Rohrradius, bzw. der Radius des Durchgangskanales, und RK der Kükenradius ist.

5. Kükenweiche nach Anspruch 4, dadurch gekennzeichnet, dass nach der Wahl von drei der vier Parameter Rohrradius (RR), Kükenradius (RK), Krümmungswinkel ($\alpha$) und Krümmungsradius der Achse des Durchgangskanales (RA) der vierte Parameter aufgrund der folgenden funktionalen Beziehung

$RA = (RK^2-RR^2)^{\frac{1}{2}}/\tan(\alpha/2)$

bestimmt wird.

6. Kükenweiche nach einem der Ansprüche 3 bis 5, dadurch gekennzeichnet, dass der Quotient zwischen Rohrradius und Kükenradius RR/RK kleiner ist als $\sin(\pi/4)$ = 0.71 und ein Krümmungswinkel von im wesentlichen 45°, sowie ein Krümmungsradius RA von im wesentlichen 2.79*RR gewählt wird.

7. Kükenweiche nach einem der Ansprüche 1 bis 6, dadurch gekennzeichnet, dass die Kanäle (3,6) vorzugsweise als runde Rohre mit konstantem Radius (RR), gegebenenfalls aber auch mit einem anderen Querschnitt mit konstanter innerer Querschnittsfläche ausgebildet sind.

8. Kükenweiche nach einem der Ansprüche 1 bis 7, dadurch gekennzeichnet, dass mindestens ein Anschlusskanal (6) gekrümmt ist und die Krümmungsrichtung mindestens eines Anschlusskanales (6) der Krümmung des Durchgangskanales entgegengesetzt ist, und vorzugsweise die Krümmungswinkel ($\delta$) mindestens eines Anschlusskanales (6) und des Durchgangskanales (3) so gewählt werden, dass mindestens in einer wahlweisen Verbindung die an die Anschlusskanäle (6) anschliessenden über den Durchgangskanal (3) miteinander verbundenen Förderleitungen zueinander parallel, insbesondere fluchtend angeordnet sind.

9. Kükenweiche nach Anspruch 8, dadurch gekennzeichnet, dass der Krümmungswinkel ($\alpha$) des Durchgangskanales (3) zwischen 40° und 50°, vorzugsweise aber im wesentlichen 45° ist und die Summe der Krümmungswinkel ($\beta,\delta$) zweier miteinander verbindbarer Anschlusskanäle (6) im wesentlichen -45° beträgt, wobei vorzugsweise beide Anschlusskanäle (6) um ca. -22.5° gekrümmt sind.

10. Kükenweiche nach einem der Ansprüche 1 bis 9, dadurch gekennzeichnet, dass mindestens ein Anschlusskanal (6) in der gleichen Richtung gekrümmt ist, wie der Durchgangskanal (3), und vorzugsweise die Krümmungswinkel mindestens eines Anschlusskanales (6) und des Durchgangskanales (3) so gewählt werden, dass mindestens in einer wahlweisen Verbindung der Winkel zwischen den miteinander verbundenen Förderleitungen maximal 90°, vorzugsweise aber 45° beträgt.

Fig.1

Fig. 2

Fig. 3

Fig. 4

7

**Europäisches Patentamt**

# EUROPÄISCHER RECHERCHENBERICHT

Nummer der Anmeldung

EP 94 11 1098

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-Q09786 (KING) <br> &GB-A-09786 A.D. 1915 <br> * das ganze Dokument * <br> --- | 1-10 | F16K11/085 |
| X | DE-B-12 18 827 (CARL HAMACHER KOMMANDIT-GESELLSCHAFT) <br> * Spalte 3, Zeile 52 - Spalte 4, Zeile 36; Abbildung 1 * <br> --- | 1-7 | |
| A | DE-U-88 11 639 (ATV ANLAGEN- UND VERFAHRENSTECHNIK GMBH) <br> * Seite 7, letzter Absatz - Seite 9, Absatz 2; Abbildung 2 * <br> --- | 1,2 | |
| A | DE-A-39 15 125 (AVT ANLAGEN- UND VERFAHRENSTECHNIK GMBH) <br> * das ganze Dokument * <br> ----- | 1,2 | |
| | | | **RECHERCHIERTE SACHGEBIETE (Int.Cl.6)** |
| | | | F16K |

Der vorliegende Recherchenbericht wurde für alle Patentansprüche erstellt

| Recherchenort | Abschlußdatum der Recherche | Prüfer |
|---|---|---|
| DEN HAAG | 15. November 1994 | Christensen, J |